# EUROPEAN PATENT APPLICATION

(11) **EP 1 983 034 A2**
(43) Date of publication of application: **22.10.2008**
(21) Application number: 08103486.0
(22) Date of filing: 10.04.2008
(51) Int. Cl.: C09D 183/04, C08K 7/20

(54) **Coating for thermal isolation and mechanical protection of pipes and equipment, compound for passive thermal isolation and its corresponding manufacturing process**

(30) Priority: 11.04.2007 BR PI0701431
(71) Applicant: Columbia Technologia em Petróleo e Serviços Ltda., 29168-026 Espírito Santo (BR)
(72) Inventor: De Abreu Jr. Alvaro Pio, 29090-060 Vitoria (BR); Varejão, Luciano Magno Costalonga, 29375-000 Espirito Santo (BR)
(74) Representative: Gervasi, Gemma

(57) **Abstract**

The present invention refers to an isolating coating for mechanical and thermal protection applied to pipes and equipment, incorporating a new compound for passive thermal isolation. Pipes are internally cleaned by heat generated by the action of a cleaning mixture. The main object of the present invention is to minimize the loss of heat as generated by the cleaning mixture and accelerate the pipe cleaning process, so to make it more efficiently. The same invention also refers to an optimized aspect of the process to manufacture the thermal isolating compound as used.

## Description

The present invention refers to an isolating coating for mechanical and thermal protection applied to pipes and equipment, incorporating a new compound for passive thermal isolation. Pipes are internally cleaned by heat generated by the action of a cleaning mixture. The main object of the present invention is to minimize the loss of heat as generated by the cleaning mixture and accelerate the pipe cleaning process, so to make it more efficiently. The same invention also refers to an optimized aspect of the process to manufacture the thermal isolating compound as used.

### FIELD OF THE INVENTION

The present invention discloses a new compound for passive thermal isolation of pipes as used in oil and gas producing wells. These tubes are used in wells located in deep and very deep waters, connecting surface installations to the mouth of the well, crossing the water blade. The main purpose of using thermal isolation using the compound as disclosed by the present invention is to increase the efficiency of the periodic cleaning process of tubes, wherein solid carbon deposits formed in high pressure and low temperature environments are removed. The use of this new compound for thermal isolation of tubes provides increased efficiency of dissolution methods for solid carbon deposits by injection of liquid chemical mixture (cleaning mixture).

### STATE OF THE ART

When oil (or gas) circulates through submerse pipes, it becomes exposed to high pressure and low temperature conditions, characteristic on sea floor. Said conditions tend to slowly clog the pipes. When the conducted fluid is oil, the involved phenomenon is called paraffination, which is the condensation of paraffin as present in oil. When the conducted fluid is natural gas, the involved phenomenon is the formation of hydrates: humidity as present in natural gas forms crystalline structures involving gases with low molecular weight such as methane, ethane, propane and butane.

Products from both phenomena adhere to tube walls. Once said processes start (oil paraffination or formation of hydrates in natural gas) and the same conditions causing them are maintained, their products tend to grow, reducing the useful section of tubes and thus reducing production of said tubes in up to 70%. Hydrates may also accumulate in various natural gas passages, making its operation become difficult or even impossible.

With the purpose to recover the original useful pipe section, the current state of the art recommends to unclog tubes by means of periodic cleaning. In said cleaning process, carbon deposits are removed by increasing the temperature inside the tubes, which tends to cause a process of dissolution of carbon deposits as adhered to internal walls.

One of the methods as used to produce said temperature increase is the injection of a liquid chemical mixture into the pipes. Said liquid mixture reacts exothermally in a controlled way, while it advances through inside the pipes, and may even reach temperatures of about 300 ºC, thus favoring dissolution and dragging of carbon deposits as adhered to internal walls. In technical jargon, the cleaning process itself and the name of the system involved in its implementation are almost merged: NGS (Nitrogen Generating System). NGS basically refers to the mixture of two salts, ammonium chloride and sodium nitrite, which reaction produces nitrogen gas, water and heat.

We should consider, however, that the submerse pipes are exposed to the phenomenon of heat transference, and it is expected that the heat as generated by the exothermal reaction of liquid mixture as injected into the pipes tends to be sent to the colder external environment involving pipes. Said loss of heat is against the initial purpose of cleaning injections, which is exactly to increase the flow temperature circulating within the pipes to enable carbon deposits as adhered to their internal walls to be taken off. This is the cause of the interest to implement efficient thermal isolation minimizing the loss of heat as generated by the cleaning mixture and thus accelerating the pipe cleaning process.

The current state of the art does not disclose any material with low density and low thermal conductivity as used for thermal isolation simultaneously meeting the following requirements:
• support temperatures of about 300 ºC;
• support high pressures as typically found in deep and very deep waters; and
• absorb deformations as linked to differential dilatation phenomena as found in various materials used in the system.

We should remark that the increase in temperature considerably optimizes the periodic tube cleaning process, reducing the time required to dissolute carbon deposits.

The material as used in thermal isolation of submerse pipes should be ideally pliable enough to simplify its application and also support dimensional variations of coated elements (tubes and mechanical components which external measurements vary according to temperature variation, especially when the cleaning injection circulates), following deformation of coated elements not presenting traction rupture.

Furthermore, physical properties of the material as applied for the thermal isolation of submerse pipes ideally cannot change significantly upon exposure to high pressure environment, submersion in salty water, large temperature fluctuations and high temperatures of up to 300 ºC due to the exothermal reaction occurring in the liquid chemical mixture as produced by NGS to clean the pipes. The material could not be structurally degraded when continually exposed to high temperatures.

Considering the disclosed technical problem, it would be desirable to make available an isolating material presenting the following characteristics:
• low density;
• resistance against high temperatures;
• resistance against high hydrostatic compression tensions;
• resistance against mechanical impacts;
• resistance against tearing;
• chemical neutrality over salty water;
• low water absorption index;
• ability to preserve its physical properties under the operation range between -40 ºC and 300 ºC

### DESCRIPTION OF THE INVENTION

The present invention will be better characterized based on the attached figures, wherein:
- Figure 1 is a crosswise section view of a preferential embodiment of the present invention; and
- Figure 2 is a lengthwise section view of a preferential embodiment of the present invention.

Based on the attached figures, we notice that the isolating compound of the present invention comprises a silicone rubber matrix resistant against continuous exposure to temperatures of up to 300 ºC to which hollow glass micro spheres are added, evenly distributed through the silicone rubber matrix with the purpose to reduce density and also the level of thermal conductivity of the material, providing the compound with high resistance against compression. The compound is applied on the external surface of the constituent elements of the submersed installation (valves, pipes and equipment in general), improving its thermal isolation over the external environment.

The silicone rubber matrix is preferably of the bi-component RTV (Room Temperature Vulcanized) type, polymerized by means of polycondensation of low thermal conductivity and resistant against high temperatures, commercially available from Dow Corning.

Glass micro spheres are preferably hollow, type Scotchlite S38 XHS, have external diameter of about 85 micrometers and resistance against isostatic compression of about 5500 psi, being commercially available from 3M. Said micro spheres may be employed with or without external coating. Sphere coating at issue is preferably made with epoxy silane®, which main purpose is to facilitate its coupling to the silicone rubber matrix composing the compound of the present invention, favoring the adherence between glass and silicone rubber. Other types of hollow glass micro spheres may also be alternatively employed to form other types of compounds next to the silicone rubber, e. g. spheres with higher mechanical resistance to isostatic compression, type Scotchlite H50/10.000 EPX. Project requirements of thermal isolation define the specification of the kind of rubber and sphere to be used to compose the mixture.

It is of key importance, when the isolating compound is projected, to observe the balance between mechanical resistance properties against rupture and pliability over thermal conductivity. Higher rate of silicone rubber supports mechanical resistance against rupture and pliability, while higher rates of hollow glass micro spheres supports low thermal conductivity and low density.

In a preferential embodiment of the present invention, the content of hollow glass micro spheres added to the silicone rubber matrix is between 1 and 40% by volume.

The isolating compound of the present invention presents a few characteristics favoring its use for thermal isolation, e. g. in an NGS type column. The preferential material of the matrix (silicon) is extremely pliable and absorbs large deformations with no rupture. Its thermal conductivity rate is low and, by adding hollow glass spheres, the resulting compound presents even better performance for thermal isolation and density. Coating made with the compound of the present invention presents good resistance against mechanical efforts as linked to temperature variation cycles, preserving its physical integrity, also having low thermal conductivity rate and good resistance against continuous exposure to temperatures of up to 300 ºC with no change of its thermal isolation or mechanical resistance properties.

Relevant standards of the compound of the present invention have been researched in a laboratory and the specific compound as assayed comprised spheres H38 XHS from 3M and silicone 3120 RTV from Dow Corning in volume proportion of 35/65. The coating was submitted to hydrostatic compression test, supporting 5000 psi pressure with no rupture of the isolating matrix. We have also effected a heating test under atmospheric pressure, causing hot air at 300 ºC to circulate through the pipe for four hours, while the external temperature outside thermal isolation is measured and the apparent thermal conductivity of the thermal isolation is calculated. The results obtained in the tests were as follows:
a) Hardness: between 55 and 60 Shore A;
b) Elongation coefficient: up to 120%;
c) Apparent thermal conductivity of the compound: 0.20 to 0.25 W/mK;
d) Equivalent density of the compound: 1.10 to 1.45 g/cm³.

### APPLICATION OF THE ISOLATING COMPOUND TO PARTS:

The compound of the present invention is typically applied as coating for industrial components (pipes, equipment in general, etc.). The full thickness of the coating layer preferably varies between 5 and 50 mm, according to project details. Thickness is defined by calculating heat transference, bearing in mind the value of thermal conductivity of the compound as designated for each application.

Concerning the physical aspect of the coating application, it is most common to shape it around each part. The process consists in manufacturing a mold involving the part (e. g. a path of piping), and the compound leaks between the part and the mold. For parts with intricate shapes and lesser thickness of thermal isolation, it may be necessary to use special pumps, with the purpose to guarantee that the compound occupies all empty spaces between the mold and the part.

An alternative method to apply the coating would be to spray still fluid coating over the part to be coated, by using a spray peak or similar device. After the cure of the isolating compound, the part is de-molded.

One of the problems noticed when the isolating coating is applied was the appearance of porosity and cracks when the isolating layer was molded. We have noticed that the problem was linked to the release of gases and/or vapors during the catalysis of the silicone rubber composing the isolating mixture. For this reason, we have decided in the present invention for the use of silicone rubber as obtained by RTV catalysis instead of silicone rubber obtained by solvent evaporation. Although the latter is more common, its catalysis reaction is exothermal and releases gases/vapor when heated, which tends to support the appearance of porosity and cracks when the isolating layer is molded.

Another advantage of the RTV type silicone rubber is its lower viscosity, which facilitates the molding operation, bearing in mind the addition of hollow glass spheres. We should also remark that spheres would tend to reduce the pliability of the compound and thus make molding difficult, especially when the project requires molding isolating layers with low thickness. This is not a problem thanks to the low viscosity characteristic of RTV silicone rubber polymerized by polycondensation as preferably used in the present invention.

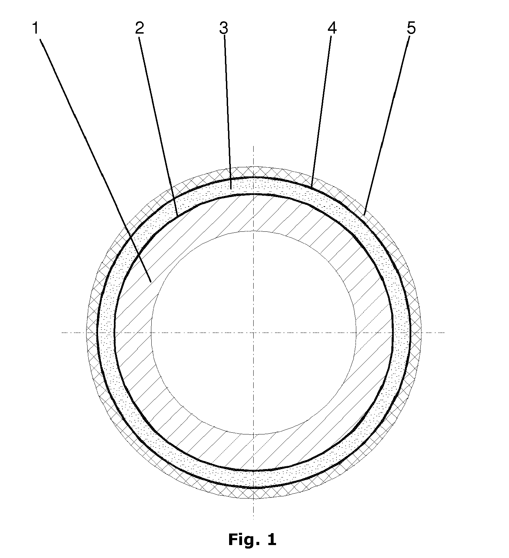

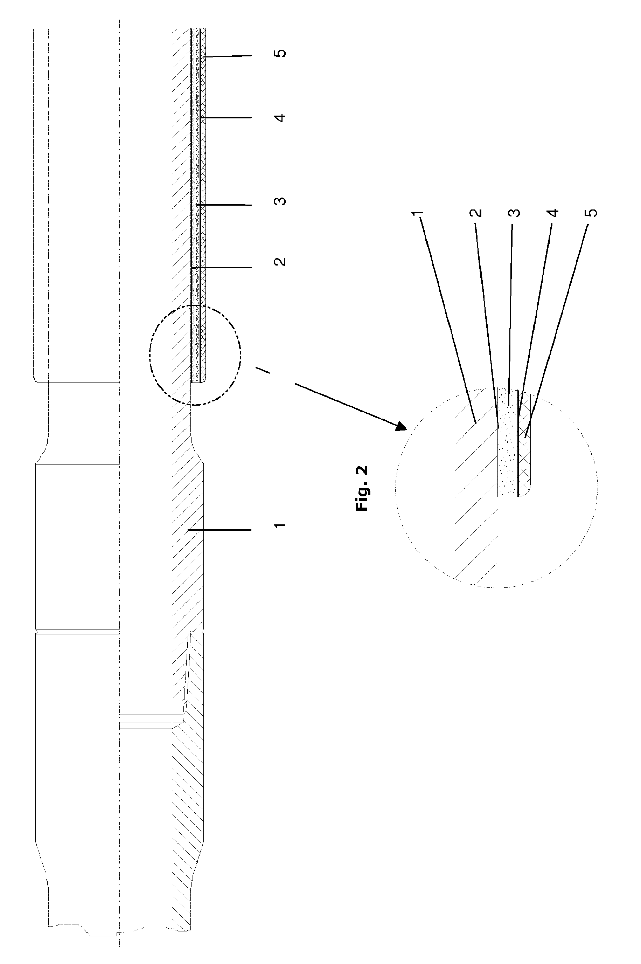

A preferential embodiment of the present invention refers to the successive disposition of two or more layers with different compositions when coating parts, so to optimize system performance. Said preferential embodiment is shown by Figures 1 and 2. Figure 1 is a crosswise section view and Figure 2 is a cut side elevation view. Both Figures show piping (1) coated by a two-layer sandwich, being the first layer (3) made of silicone rubber compound with hollow glass micro spheres to support high temperatures and the external layer (5) of polyurethane rubber (with no glass spheres). The interface (2) is composed by a primer layer type 1200 Prime Coat commercially available from Dow Corning, and the interface (4) is composed by a layer of that same primer. The nearer layer (1) to piping uses the silicone rubber compound with hollow glass micro spheres which is able to support high temperatures, and the external layer (5) of polyurethane rubber (with no glass spheres) presents higher mechanical resistance properties than the compound containing glass spheres. This preferential disposition aims to make better use of the properties of each material. The silicone rubber compound with hollow glass micro spheres well supports high temperatures, but is relatively susceptible to damage by mechanical action. Polyurethane with no glass micro spheres does not well support continued exposure to temperatures higher than 80 ºC, but presents excellent mechanical resistance properties, thus favoring its handling on surface.

The application of isolation as per the present invention is made on the ground, within industrial environment. The sequence of application is as follows: Before the compound is molded, the part or component (1) is jetted and clean. A layer of heat-resistant primer (2) is applied; preferably 1200 Prime Coat as commercially available from Dow Corning, to support the adherence between the steel substrate of the part (1) and the isolating compound (3) to be molded. After the isolating compound (3) is applied, a second layer of primer (4) is applied to promote the adherence between the isolating compound (3) based on silicone rubber and the polyurethane rubber layer (5).

For reasons of layer homogeneity and workability upon molding, it is recommended that the minimum thickness of the layer (3) made of the silicone rubber compound with hollow glass micro spheres is of at least 5 mm. The thickness of the external layer of polyurethane rubber (5) depends on the temperature of the interface (4) interposing between layers (3) and (5) made of different materials, and this temperature is obtained from the thermal calculation. The external layer (5) of polyurethane rubber presents higher hardness between 85 and 95 Shore A and good mechanical properties, such as excellent resistance against tearing, thus giving to the external coating resistance against mechanical efforts typically applied in the field, especially when handling pipes. Besides mechanical resistance, the layer of polyurethane rubber (5) also meets the purpose to reduce the cost of thermal isolation, since the base layer of silicone rubber compound and micro spheres (3) presents a proportionally high cost. Furthermore, the layer (3) presents rigidity and fragility restrictions in comparison with the layer of pure silicone rubber (5), causing the preferential use of a sandwich.

The isolating compound of the present invention offers multiple advantages in comparison with the isolation alternatives of the current state of the art. The most immediate one is that the compound presents low density and low thermal conductivity, enabling simultaneous resistance to continuous exposure to temperatures of about 300 ºC, saline environment and high pressures as typically found in deep and very deep waters, not suffering significant changes of its physical properties, nor structural degradation. It also helps to reduce mechanical efforts caused by the hydrodynamic action (sea currents, tide, etc.).

Finally, another advantage is the sufficient pliability to simplify its application and also support dimensional variations of the coated elements, following deformation of the coated elements not presenting rupture by traction.

Those skilled in the art will conclude that the description of one of the preferential embodiments as made above does not limit the application of the present invention to elements with the disclosed characteristics, and may also be applied to other similar elements not escaping from the scope and inventive spirit as contemplated by the attached claims.

## Claims

1. "Coating for thermal isolation and mechanical protection of pipes and equipment" **characterized by** comprising at least two layers, being one layer (3) made of a compound for passive thermal isolation made of silicone rubber with hollow glass micro spheres and another layer (5) made of polyurethane rubber, and the layer (3) is preferably located at the inner portion of said coating; being interfaces (2) and (4) composed by layers of primer and the minimum thickness of the layer (3) made of the silicone rubber compound with hollow glass micro spheres is 5 mm.

2. "Coating" of claim 1, **characterized by** said compound for passive thermal isolation comprising a silicone matrix and a given quantity of hollow glass spheres regularly distributed in said matrix, and said silicone matrix presents a given viscosity value, hollow glass spheres present a given equivalent density value and the compound presents a given equivalent hardness value, equivalent thermal conductivity and equivalent density, and in said compound the proportion by volume of glass micro spheres is preferably between 1% and 50%.

3. "Compound for passive thermal isolation" used in a coating as per claim 2, **characterized by** the viscosity of said silicone matrix being preferably between 10K and 28K cPs (centipoises) at 25 °C.

4. "Compound" of claim 3, **characterized by** the equivalent density of said hollow glass spheres being preferably between 0.32 and 0.50.

5. "Compound" of claim 3, **characterized by** the equivalent hardness of the compound being preferably located between 40 and 60 Shore A.

6. "Compound" of claim 3, **characterized by** the equivalent thermal conductivity of the compound being preferably between 0.20 and 0.25 W/mK.

7. "Compound" of claim 3, **characterized by** the equivalent density of the compound being preferably between 1.10 and 1.45 kg/liter.

8. "Process to manufacture" the compound for passive thermal isolation as used in coating as per claim 3, **characterized by** preferably using a bi-component RTV type silicone rubber polymerized by polycondensation instead of silicone rubber as obtained by evaporating the solvent.
